# EUROPÄISCHE PATENTANMELDUNG

(11) **EP 1 645 996 A1**
(43) Veröffentlichungstag der Anmeldung: **12.04.2006**
(21) Anmeldenummer: 04024004.6
(22) Anmeldetag: 08.10.2004
(51) Int. Cl.: G06Q 10/00

(54) **Verfahren und System zur Disponierung von Anzeigen in Druckprodukten**

(71) Anmelder: MAN Roland Druckmaschinen AG, 63012 Offenbach (DE)
(72) Erfinder: Ruhle, Martin, 22391 Hamburg (DE)
(74) Vertreter: Zacharias, Frank L.

(57) **Zusammenfassung**

Die Erfindung betrifft ein System und ein Verfahren zur Disponierung von Anzeigen in Druckprodukten. Das erfindungsgemäße System (10) umfasst zumindest: a) eine Einrichtung (19) zum automatischen Empfangen von über das Internet übermittelten, anzeigenspezifischen Daten, insbesondere von Daten über einen Erscheinungstag und/oder eine Platzierung und/oder eine Gestaltung, mindestens einer Anzeige; b) eine Einrichtung (19) zum automatischen Überprüfen von anzeigenspezifischen Daten auf Verfügbarkeit und/oder drucktechnische Umsetzbarkeit durch Vergleich der anzeigenspezifischen Daten mit Einträgen mindestens einer Datenbank (20); c) eine Einrichtung (19) zum automatischen Generieren und Senden von Bestätigungen und/oder Meldungen über die Verfügbarkeit und/oder drucktechnische Umsetzbarkeit der anzeigenspezifischen Daten über das Internet; d) eine Einrichtung (19) zum automatischen Aktualisieren der Einträge der oder jeder Datenbank (20) durch Abgleich mit den anzeigenspezifischen Daten.

## Beschreibung

Die Erfindung betrifft ein Verfahren zur Disponierung von Anzeigen in Druckprodukten. Des weiteren betrifft die Erfindung ein System zur Disponierung von Anzeigen in Druckprodukten.

Die Disponierung von Anzeigen in Druckprodukten wie Zeitungen oder Zeitschriften erfolgt nach dem Stand der Technik derart, dass ein Inserent anzeigenspezifische Daten, wie zum Beispiel Daten über einen gewünschten Erscheinungstag der Anzeige, eine gewünschte Platzierung der Anzeige im Druckprodukt sowie über eine gewünschte drucktechnische Gestaltung der Anzeige per Fax, Telefon oder E-Mail an einen Verlag übermittelt. Der Verlag überprüft dann durch betriebsinterne Kommunikation, ob die vom Inserenten definierten, anzeigespezifischen Daten verfügbar sowie drucktechnisch umsetzbar sind. So muss zum Beispiel überprüft werden, ob zu einem gewünschten Erscheinungstag die gewünschte Platzierung der Anzeige verfügbar ist. So kann es zum Beispiel sein, dass am gewünschten Erscheinungstag einer Zeitung dieselbe keinen Immobilienteil enthält, so dass die Anzeige nicht im Immobilienteil platziert werden kann. Weiterhin ist es möglich, dass zum gewünschten Erscheinungstag die Platzierung bereits an einen anderen Interessenten vergeben wurde. Hierzu sind verlagsinterne Prüfungen mit der Anzeigenabteilung sowie einer oder mehreren Redaktionen erforderlich. Weiterhin ist es erforderlich, die vom Inserenten definierten, anzeigespezifischen Daten auf drucktechnische Umsetzbarkeit zu überprüfen. So kann es zum Beispiel sein, dass die vom Inserenten vorgegebene Farbgestaltung der Anzeige aufgrund von drucktechnischen Beschränkungen innerhalb der Druckerei technisch nicht realisiert werden kann. Hierzu sind Abstimmungen mit einer Druckerei erforderlich.

Die obigen Überprüfungen der vom Inserenten definierten, anzeigenspezifischen Daten auf Verfügbarkeit sowie drucktechnische Umsetzbarkeit erfolgt nach dem Stand der Technik weitestgehend individuell bzw. manuell, einerseits durch Rücksprache mit der Druckerei sowie andererseits durch Rücksprache mit der Anzeigenabteilung sowie den Redaktionen. Diese individuelle bzw. manuelle Bearbeitung von Anzeigenwünschen erfordert einen hohen Zeitaufwand, so dass dem Inserenten lediglich eine deutlich zeitversetzte Reaktion auf seinen Anzeigenwunsch übermittelt werden kann. Weiterhin kann die aus dem Stand der Technik bekannte Vorgehensweise zur Disponierung von Anzeigen in Druckprodukten zur Doppelvergabe von Inseratsplätzen bzw. Anzeigeplätzen im Druckprodukt führen, da die bei der Überprüfung beteiligten Abteilungen bzw. Personen unter Umständen nicht auf denselben Informationsstand zugreifen können. Die aus dem Stand der Technik bekannte, individuelle bzw. manuelle Überprüfung von durch einen Inserenten definierten, anzeigenspezifischen Daten ist daher fehlerbehaftet.

Hiervon ausgehend liegt der vorliegenden Erfindung das Problem zugrunde, ein neuartiges Verfahren zur Disponierung von Anzeigen in Druckprodukten sowie ein entsprechendes System zu schaffen.

Dieses Problem wird durch ein Verfahren zur Disponierung von Anzeigen in Druckprodukten gemäß Anspruch 1 gelöst. Erfindungsgemäß umfasst das Verfahren zur Disponierung von Anzeigen in Druckprodukten zumindest die folgenden Schritte: a) automatische Übermittlung von anzeigenspezifischen Daten, insbesondere von Daten über einen Erscheinungstag und/oder eine Platzierung und/oder eine Gestaltung, mindestens einer Anzeige über das Internet; b) automatische Überprüfung von anzeigenspezifischen Daten auf Verfügbarkeit und/oder drucktechnische Umsetzbarkeit durch Vergleich der anzeigenspezifischen Daten mit Einträgen mindestens einer Datenbank; c) automatische Generierung sowie Übermittlung von Bestätigungen und/oder Meldungen über die Verfügbarkeit und/oder drucktechnische Umsetzbarkeit der anzeigenspezifischen Daten über das Internet; d) automatisiertes Aktualisierung der Einträge der oder jeder Datenbank durch Abgleich mit anzeigenspezifischen Daten.

Mit der hier vorliegenden Erfindung wird die Disponierung von Anzeigen in Druckprodukten automatisiert, wodurch einem Inserenten eine unmittelbare Reaktion auf vom Inserenten definierte, anzeigenspezifische Daten zur Verfügung gestellt werden kann. Durch die automatische Überprüfung entfallen individuelle, manuelle sowie aufwendige Kommunikationsprozeduren, so dass Fehlerquellen reduziert werden. Einem Inserenten kann eine zeitnahe, kurzfristige sowie genaue Rückmeldung zu den gewünschten, anzeigenspezifischen Daten zur Verfügung gestellt werden. Die erfindungsgemäße, automatische Überprüfung der vom Inserenten definierten, anzeigenspezifischen Daten erfolgt im Sinne der hier vorliegenden Erfindung sowohl auf Verfügbarkeit als auch auf drucktechnische Umsetzbarkeit.

Das erfindungsgemäße System zur Disponierung von Anzeigen in Druckprodukten ist in Anspruch 15 definiert. Das System umfasst zumindest: a) eine Einrichtung zum automatischen Empfangen von über das Internet übermittelten, anzeigenspezifischen Daten, insbesondere von Daten über einen Erscheinungstag und/oder eine Platzierung und/oder eine Gestaltung, mindestens einer Anzeige; b) eine Einrichtung zum automatischen Überprüfen von anzeigenspezifischen Daten auf Verfügbarkeit und/oder drucktechnische Umsetzbarkeit durch Vergleich der anzeigenspezifischen Daten mit Einträgen mindestens einer Datenbank; c) eine Einrichtung zum automatischen Generieren und Senden von Bestätigungen und/oder Meldungen über die Verfügbarkeit und/oder drucktechnische Umsetzbarkeit der anzeigenspezifischen Daten über das Internet; d) eine Einrichtung zum automatischen Aktualisieren der Einträge der oder jeder Datenbank durch Abgleich mit anzeigenspezifischen Daten.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:
- Fig. 1:: eine schematisierte Darstellung eines erfindungsgemäßen Systems zur Disponierung von Anzeigen in Druckprodukten; und
- Fig. 2:: ein Signalflussdiagramm zur Verdeutlichung des erfindungsgemäßen Verfahrens zur Disponierung von Anzeigen in Druckprodukten.
Nachfolgend wird die hier vorliegende Erfindung unter Bezugnahme auf Fig. 1 bis 2 in größerem Detail beschrieben.

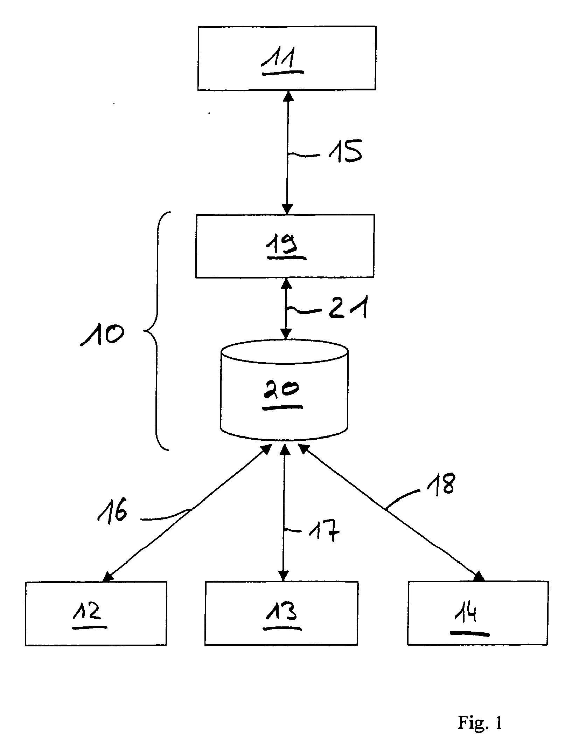

Fig. 1 zeigt stark schematisiert ein erfindungsgemäßes System 10 zur Disponierung von Anzeigen in Druckprodukten, wobei das erfindungsgemäße System 10 einerseits mit einer inserentenseitigen Datenverarbeitungseinrichtung 11 und andererseits mit Datenverarbeitungseinrichtungen 12, 13 und 14 Daten austauscht, nämlich mit einer anzeigenabteilungsseitigen Datenverarbeitungseinrichtung 12, einer redaktionsseitigen Datenverarbeitungseinrichtung 13 und einer druckereiseitigen Datenverarbeitungseinrichtung 14. Der Datenaustausch zwischen dem erfindungsgemäßen System 10 zur Disponierung von Anzeigen und den Datenverarbeitungseinrichtungen 11, 12, 13 und 14 erfolgt, wie Fig. 1 durch Doppelpfeile 15, 16, 17 und 18 visualisiert, vorzugsweise bidirektional. Der Datenaustausch zwischen dem erfindungsgemäßen System 10 und der inserentenseitigen Datenverarbeitungseinrichtung 11 erfolgt über das Internet. Der Datenaustausch zwischen dem erfindungsgemäßen System 10 und der anzeigenabteilungsseitigen Datenverarbeitungseinrichtung 12 sowie der redaktionsseitigen Datenverarbeitungseinrichtung 13 erfolgt vorzugsweise über das Intranet. Die Kommunikation mit der druckereiseitigen Datenverarbeitungseinrichtung 14 erfolgt entweder über das Intranet oder das Internet. Das erfindungsgemäße System 10 zur Disponierung von Anzeigen umfasst eine Datenverarbeitungseinrichtung 19, die auf eine Datenbank 20 zugreift. Der Datenaustausch zwischen der Datenverarbeitungseinrichtung 19 sowie der Datenbank 20 des erfindungsgemäßen Systems zur Disponierung von Anzeigen erfolgt im Sinne des Doppelpfeils 21 wiederum vorzugsweise bidirektional.

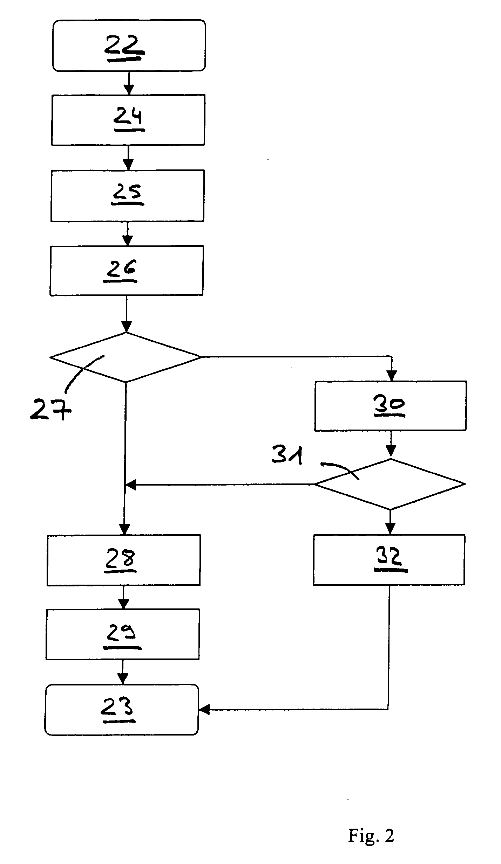

Die Funktionsweise des erfindungsgemäßen Systems 10 zur Disponierung von Anzeigen in Druckprodukten wird nachfolgend unter Bezugnahme auf Fig. 2 beschrieben. In Fig. 2 ist der automatische Ablauf bei der Disponierung von Anzeigen in Druckprodukten durch ein Blockdiagramm bzw. Signalflussdiagramm schematisiert dargestellt, wobei ein Block 22 den Start bzw. Beginn und ein Block 23 das Ende des Disponierungsvorgangs von Anzeigen in Druckprodukten visualisiert.

Nach Start des Disponierungsvorgangs im Sinne des Blocks 22 wird im Sinne der hier vorliegenden Erfindung ein in der inserentenseitigen Datenverarbeitungseinrichtung 11 definiertes, anzeigenspezifisches Datum, insbesondere einen oder mehrere Erscheinungstage einer gewünschten Anzeige, im Sinne des Doppelpfeils 15 automatisch an das erfindungsgemäße System 10 zur Disponierung von Anzeigen, nämlich an die Datenverarbeitungseinrichtung 19 des Systems 10, übermittelt. Hierzu sind in die Datenverarbeitungseinrichtung 19 des erfindungsgemäßen Systems 10 Einrichtungen zum automatischen Empfangen von anzeigenspezifischen Daten integriert. Die automatische Übermittlung des in der inserentenseitigen Datenverarbeitungseinrichtung 11 definierten, anzeigenspezifischen Datums, nämlich des Erscheinungstags der Anzeige, an das System 10 erfolgt über das Internet ist in Fig. 2 durch den Block 24 visualisiert.

Nach Übermittlung des inserentenseitig, definierten, anzeigenspezifischen Datums, nämlich des Erscheinungstags der Anzeige, erfolgt eine automatische Überprüfung dahingehend, ob der inserentenseitig definierte Erscheinungstag verfügbar ist. Des weiteren wird automatisch überprüft, welche Platzierungen von Anzeigen zum gewünschten Erscheinungstag verfügbar sind. Hierzu sind in die Datenverarbeitungseinrichtung 19 des erfindungsgemäßen Systems 10 Einrichtungen zur automatischen Überprüfung von anzeigenspezifischen Daten auf Verfügbarkeit integriert. Die Einrichtungen vergleichen die inserentenseitig definierten, anzeigenspezifischen Daten mit Einträgen mindestens einer Datenbank 20, wobei die Einträge in der Datenbank 20 auch über die Datenverarbeitungseinrichtungen 12, 13 und 14 gepflegt werden. Die oben beschriebene, automatische Überprüfung anzeigenspezifischer, inserentenseitig definierter Daten ist in Fig. 2 durch den Block 25 visualisiert.

Als Ergebnis dieser Überprüfung werden vom erfindungsgemäßen System 10 automatisch Bestätigungen bzw. Meldungen generiert und automatisch an die inserentenseitige Datenverarbeitungseinrichtung 11 über das Internet im Sinne des Doppelpfeils 15 übermittelt. Wird bei der automatischen Überprüfung in Block 25 festgestellt, dass der inserentenseitig definierte, gewünschte Erscheinungstag verfügbar ist, so wird eine Bestätigung hierüber automatisch generiert und an die inserentenseitige Datenverarbeitungseinrichtung 11 übermittelt, und zwar zusammen mit einer Mitteilung darüber, welche Platzierungen für Anzeigen zu diesem Erscheinungstag verfügbar sind. Wird hingegen bei der Überprüfung festgestellt, dass der inserentenseitig, definierte, gewünschte Erscheinungstag für die Anzeige nicht verfügbar ist, so wird hierüber automatisch eine Meldung generiert und über das Internet an die inserentenseitige Datenverarbeitungseinrichtung 11 übermittelt. Vorzugsweise wird hierbei weiterhin automatisch eine Meldung über alternative Erscheinungstage sowie über an diesen alternativen Erscheinungstagen verfügbare Platzierungen übermittelt. Hierzu verfügt das erfindungsgemäße System 10, nämlich die Datenverarbeitungseinrichtung 19 derselben, einerseits über Einrichtungen zur automatischen Generierung von Bestätigungen bzw. Meldungen sowie über Einrichtungen zum automatischen Senden der Bestätigungen bzw. Meldungen. Die oben beschriebene, automatische Generierung von Bestätigungen bzw. Meldungen sowie die automatische Übermittlung der Bestätigungen bzw. Meldungen an die inserentenseitige Datenverarbeitungseinrichtung 11 ist in Fig. 2 durch den Block 26 visualisiert.

Im Anschluss wird durch das erfindungsgemäße System 10 automatisch überprüft, ob ein weiteres inserentenseitig definiertes, anzeigenspezifisches Datum, nämlich eine gewünschte Gestaltung der Anzeige, drucktechnisch bzw. druckereiseitig umsetzbar ist. Diese automatische Überprüfung der drucktechnischen Umsetzbarkeit der inserentenseitig definierten Gestaltung der Anzeige ist in Fig. 2 durch den Block 27 dargestellt. Zur Durchführung dieser automatischen Überprüfung greift die Datenverarbeitungseinrichtung 19 des erfindungsgemäßen Systems wiederum automatisch auf die Datenbank 20 zu, in welcher die zur Durchführung der automatischen Überprüfung notwendigen Daten, mit welchen die inserentenseitig definierten, anzeigenspezifischen Daten verglichen werden müssen, abgelegt sind.

Wird bei der Überprüfung im Sinne des Blocks 27 festgestellt, dass die inserentenseitig definierte, anzeigenspezifische Gestaltung technisch umsetzbar ist, so wird auf Block 28 verzweigt, und es wird automatisch durch die Datenverarbeitungseinrichtung 19 eine Bestätigung generiert und an die inserentenseitige Datenverarbeitungseinrichtung 11 übermittelt, dass die anzeigenspezifischen Daten sowohl verfügbar als auch drucktechnisch umsetzbar sind. Diese im Sinne des Blocks 27 automatisch generierte und übermittelte Bestätigung steht einer Auftragsbestätigung an den Inserenten gleich.

Nach der automatischen Übermittlung der Auftragsbestätigung an die inserentenseitige Datenverarbeitungseinrichtung 11 im Sinne des Blocks 28 wird des weiteren im Sinne des Blocks 29 automatisch die Datenbank 20 dahingehend aktualisiert, dass eine vergebene Platzierung als nicht-verfügbar markiert wird. Hierdurch ist gewährleistet, dass eine einmal automatisch vergebene Platzierung für eine Anzeige nicht doppelt vergeben werden kann. Hierzu sind in die Datenverarbeitungseinrichtung 19 Einrichtungen zum automatischen Aktualisieren der Einträge der Datenbank 20 integriert.

Wird hingegen bei der automatischen Überprüfung im Sinne des Blocks 27 festgestellt, dass eine inserentenseitig definierte, anzeigenspezifische Gestaltung drucktechnisch nicht umsetzbar ist, so wird auf den Block 30 verzweigt und es wird automatisch eine diesbezügliche Meldung generiert und automatisch an die inserentenseitige Datenverarbeitungseinrichtung 11 übermittelt. Diese Meldung enthält vorzugsweise Daten über eine alternative, drucktechnisch umsetzbare Gestaltung der Anzeige. So ist es möglich, dass zum Beispiel eine inserentenseitig definierte Farbgestaltung einer Anzeige an einer Druckmaschine nicht gedruckt werden kann. Es liegt dann im Sinne der hier vorliegenden Erfindung, eine alternative Farbgestaltung für die Anzeige automatisch zu generieren und dem Inserenten über das Internet automatisch mitzuteilen.

Nach Übermittlung der Daten über eine alternative Gestaltung der Anzeige an die inserentenseitige Datenverarbeitungseinrichtung 11 im Sinne des Blocks 30 wird im Sinne des Blocks 31 automatisch überprüft, ob der Inserent die alternative Gestaltung der Anzeige genehmigt. Ist dies der Fall, so wird auf Block 28 verzweigt. Ist dies nicht der Fall, so wird im Sinne des Blocks 32 automatisch eine Meldung generiert sowie an die inserentenseitige Datenverarbeitungseinrichtung 11 übermittelt, dass die inserentenseitig spezifizierte Anzeige nicht ausgeführt werden kann. Die Disponierung ist dann im Sinne des Blocks 23 beendet. Bezugszeichenliste
- 10: System
- 11: Datenverarbeitungseinrichtung
- 12: Datenverarbeitungseinrichtung
- 13: Datenverarbeitungseinrichtung
- 14: Datenverarbeitungseinrichtung
- 15: Doppelpfeil
- 16: Doppelpfeil
- 17: Doppelpfeil
- 18: Doppelpfeil
- 19: Datenverarbeitungseinrichtung
- 20: Datenbank
- 21: Doppelpfeil
- 22: Block
- 23: Block
- 24: Block
- 25: Block
- 26: Block
- 27: Block
- 28: Block
- 29: Block
- 30: Block
- 31: Block
- 32: Block

## Patentansprüche

1. Verfahren zur Disponierung von Anzeigen in Druckprodukten, mit folgenden Schritten:
a) automatische Übermittlung von anzeigenspezifischen Daten, insbesondere von Daten über einen Erscheinungstag und/oder eine Platzierung und/oder eine Gestaltung, mindestens einer Anzeige über das Internet;
b) automatische Überprüfung von anzeigenspezifischen Daten auf Verfügbarkeit und/oder drucktechnische Umsetzbarkeit durch Vergleich der anzeigenspezifischen Daten mit Einträgen mindestens einer Datenbank;
c) automatische Generierung und Übermittlung von Bestätigungen und/oder Meldungen über die Verfügbarkeit und/oder drucktechnische Umsetzbarkeit der anzeigenspezifischen Daten über das Internet;
d) automatisierte Aktualisierung der Einträge der oder jeder Datenbank durch Abgleich mit den anzeigenspezifischen Daten.

2. Verfahren nach Anspruch 1, **dadurch gekennzeichnet, dass** im Falle der Nichtverfügbarkeit und/oder Nichtumsetzbarkeit der anzeigenspezifischen Daten automatisch eine Meldung generierbar und übermittelbar ist.

3. Verfahren nach Anspruch 2, **dadurch gekennzeichnet, dass** zusammen mit der Meldung alternative, verfügbare und/oder umsetzbare anzeigenspezifischen Daten generierbar und übermittelbar sind.

4. Verfahren nach einem oder mehreren der Ansprüche 1 bis 3, **dadurch gekennzeichnet, dass** nach Übermittlung mindestens eines inserentenseitig definierten, anzeigenspezifischen Erscheinungstags automatisch überprüft wird, ob der oder jeder Erscheinungstag verfügbar ist und welche Platzierungen zu dem oder jedem Erscheinungstag verfügbar sind.

5. Verfahren nach Anspruch 4, **dadurch gekennzeichnet, dass** dann, wenn bei der automatischen Überprüfung festgestellt wird, dass ein Erscheinungstag verfügbar ist, automatisch eine Bestätigung erzeugt und über das Internet übermittelt wird.

6. Verfahren nach Anspruch 4 oder 5, **dadurch gekennzeichnet, dass** dann, wenn bei der automatischen Überprüfung festgestellt wird, dass ein Erscheinungstag nicht verfügbar ist, automatisch eine Meldung sowie ein alternativer Erscheinungstag erzeugt und über das Internet übermittelt wird.

7. Verfahren nach einem oder mehreren der Ansprüche 1 bis 6, **dadurch gekennzeichnet, dass** nach Übermittlung mindestens einer inserentenseitig definierten, anzeigenspezifischen Platzierung automatisch überprüft wird, ob die oder jede Platzierung verfügbar ist.

8. Verfahren nach Anspruch 7, **dadurch gekennzeichnet, dass** dann, wenn bei der automatischen Überprüfung festgestellt wird, dass eine Platzierung verfügbar ist, automatisch eine Bestätigung erzeugt und über das Internet übermittelt wird.

9. Verfahren nach Anspruch 7 oder 8, **dadurch gekennzeichnet, dass** dann, wenn bei der automatischen Überprüfung festgestellt wird, dass eine Platzierung nicht verfügbar ist, automatisch eine Meldung sowie ein alternative Platzierung erzeugt und über das Internet übermittelt wird.

10. Verfahren nach einem oder mehreren der Ansprüche 1 bis 9, **dadurch gekennzeichnet, dass** nach Übermittlung mindestens einer inserentenseitig definierten, anzeigenspezifischen Gestaltung automatisch überprüft wird, ob die oder jede Gestaltung drucktechnisch umsetzbar ist.

11. Verfahren nach Anspruch 10, **dadurch gekennzeichnet, dass** dann, wenn bei der automatischen Überprüfung festgestellt wird, dass eine Gestaltung drucktechnisch umsetzbar ist, automatisch eine Bestätigung erzeugt und über das Internet übermittelt wird.

12. Verfahren nach Anspruch 10 oder 11, **dadurch gekennzeichnet, dass** dann, wenn bei der automatischen Überprüfung festgestellt wird, dass eine Gestaltung drucktechnisch nicht umsetzbar ist, automatisch eine Meldung sowie ein alternative Gestaltung erzeugt und über das Internet übermittelt wird.

13. Verfahren nach einem oder mehreren der Ansprüche 1 bis 12, **dadurch gekennzeichnet, dass** bei Verfügbarkeit und/oder drucktechnischer Umsetzbarkeit von allen inserentenseitig definierten, anzeigenspezifischen Daten automatisch eine Auftragsbestätigung erzeugt und über das Internet übermittelt wird.

14. Verfahren nach Anspruch 13, **dadurch gekennzeichnet, dass** nach Auftragsbestätigung die oder jede Datenbank derart automatisch aktualisiert wird, dass vergebende Platzierungen als nicht-verfügbar markiert werden.

15. System zur Disponierung von Anzeigen in Druckprodukten mit:
a) einer Einrichtung (19) zum automatischen Empfangen von über das Internet übermittelten, anzeigenspezifischen Daten, insbesondere von Daten über einen Erscheinungstag und/oder eine Platzierung und/oder eine Gestaltung, mindestens einer Anzeige;
b) einer Einrichtung (19) zum automatischen Überprüfen von anzeigenspezifischen Daten auf Verfügbarkeit und/oder drucktechnische Umsetzbarkeit durch Vergleich der anzeigenspezifischen Daten mit Einträgen mindestens einer Datenbank (20);
c) einer Einrichtung (19) zum automatischen Generieren und Senden von Bestätigungen und/oder Meldungen über die Verfügbarkeit und/oder drucktechnische Umsetzbarkeit der anzeigenspezifischen Daten über das Internet; d) einer Einrichtung (19) zum automatischen Aktualisieren der Einträge der oder jeder Datenbank (20) durch Abgleich mit den anzeigenspezifischen Daten.

16. System nach Anspruch 15, **gekennzeichnet durch** eine Einrichtung (19) zum automatischen Generieren von Bestätigungen, wenn inserentenseitig definierte, anzeigenspezifische Daten verfügbar und/oder umsetzbar sind, und zum automatischen Generieren von Meldungen, wenn inserentenseitig definierte, anzeigenspezifische Daten nicht verfügbar und/oder nicht umsetzbar sind.

17. System nach Anspruch 15 oder 16, **gekennzeichnet durch** eine Einrichtung (19) zum automatischen Generieren von Meldungen über alternativ verfügbare und/oder umsetzbare anzeigenspezifische Daten, wenn inserentenseitig definierte, anzeigenspezifische Daten nicht verfügbar und/oder nicht umsetzbar sind.
